# FASCICULE DE BREVET EUROPEEN

(11) **EP 3 074 472 B1**
(45) Date de publication et mention de la délivrance du brevet: **03.10.2018**
(21) Numéro de dépôt: 14802441.7
(22) Date de dépôt: 24.11.2014
(51) Int. Cl.: C09D 11/52, B01F 17/00, C09D 11/00, B01F 17/16

(54) **DISPERSIONS DE NANOPARTICULES D'ARGENT**
DISPERSIONEN AUS SILBERNANOPARTIKELN
DISPERSIONS OF SILVER NANOPARTICLES

(30) Priorité: 27.11.2013 FR 1302744
(43) Date de publication de la demande: 05.10.2016
(73) Titulaire: Genes'Ink SA, 13790 Rousset (FR)
(72) Inventeur: KAUFFMANN, Louis Dominique, F-83260 La Crau (FR); DELPONT, Nicolas, F-13770 Venelles (FR); EL QACEMI, Virginie, F-13360 Roquevaire (FR); STAELENS, Gregoire, F-13090 Aix en Provence (FR)
(74) Mandataire: King, Alex
(86) Numéro de dépôt international: PCT/EP2014/075416
(87) Numéro de publication internationale: WO 2015/078819

(56) Documents cités:
- EP-A1- 2 119 747
- WO-A1-2012/171934
- WO-A2-2010/101418
- US-A1- 2010 143 591
- US-A1- 2011 198 113

## Description

La présente invention a pour objet des formulations de dispersions de nanoparticules d'argent et d'encres à base des dites dispersions. En particulier, la présente invention concerne des dispersions stables et à forte concentration de nanoparticules d'argent.

Plus particulièrement, la présente invention se rapporte au domaine des encres à base de nanoparticules conductrices adaptées pour de nombreuses méthodes d'impression. On citera à titre d'exemples non limitatifs les méthodes d'impression suivantes : jet d'encre, spray, sérigraphie, héliogravure, flexographie, doctor blade, spin coating, et slot die coating.

Les encres à base de nanoparticules conductrices selon la présente invention peuvent être imprimées sur tous types de supports. On citera à titre d'exemple les supports suivants : polymères et dérivés de polymères, matériaux composites, matériaux organiques, matériaux inorganiques.

Les encres à base de nanoparticules conductrices selon la présente invention présentent de nombreux avantages parmi lesquels nous citerons à titre d'exemples non limitatifs :
- une stabilité dans le temps supérieure aux encres actuelles ;
- une versatilité quant à leur domaine d'application ;
- une non-toxicité des solvants et des nanoparticules ;
- une conservation des propriétés intrinsèques des nanoparticules ; et, en particulier,
- une conservation des propriétés électroniques, et
- une conductivité améliorée pour des températures de recuit inférieures à 200°C et plus particulièrement pour des températures de recuit inférieures ou égales à 150°C. Cette conductivité améliorée est généralement démontrée grâce à la mesure de résistance carrée du matériau.

La présente invention se rapporte également à une méthode de préparation améliorée des dites dispersions et encres ; enfin, la présente invention se rapporte aussi à l'utilisation des dites encres dans les domaines de l'électronique imprimée (par exemple les supports RFID (Identification par Radio Fréquence)), du photovoltaïque, des OLED (diode électroluminescente organique), des capteurs (par exemple des capteurs de gaz), des dalles tactiles, des biocapteurs, et des technologies sans contact (« contactless technologies »).

A la vue de la littérature de ces dernières années, les nanocristaux colloïdaux conducteurs ont reçu beaucoup d'attention grâce à leurs nouvelles propriétés optoélectroniques, photovoltaïques et catalytiques. Cela les rend particulièrement intéressants pour de futures applications dans le domaine de la nanoélectronique, des cellules solaires, des capteurs et du biomédical.

Le développement de nanoparticules conductrices permet de recourir à de nouvelles mises en oeuvre et d'entrevoir une multitude de nouvelles applications. Les nanoparticules possèdent un rapport surface / volume très important et la substitution de leur surface par des tensioactifs entraîne le changement de certaines propriétés, notamment optiques, et la possibilité de les disperser.

Leurs faibles dimensions peuvent amener dans certains cas des effets de confinement quantique. Les nanoparticules sont des composés dont au moins une de leur dimension est inférieure à 100 nm. Ils peuvent présenter différentes formes : des billes (de 1 à 100 nm), des bâtonnets (L < 200 à 300 nm), des fils (quelques centaines de nanomètres voire quelques microns), des disques, des étoiles, des pyramides, des tétrapodes, des cubes ou des cristaux lorsqu'ils n'ont pas de forme prédéfinie.

Plusieurs procédés ont été élaborés afin de synthétiser des nanoparticules conductrices. Parmi eux, on peut citer de façon non exhaustive :
- les procédés physiques :
   ▪ la déposition de vapeur chimique (aussi connue sous la dénomination « Chemical Vapor Deposition - CVD ») lorsqu'un substrat est exposé à des précurseurs chimiques volatilisés qui réagissent ou se décomposent sur sa surface. Ce procédé conduit généralement à la formation de nanoparticules dont la morphologie dépend des conditions utilisées ;
   ▪ l'évaporation thermique ;
   ▪ l'épitaxie par jets moléculaires (aussi connue sous la dénomination « Molecular Beam Epitaxy ») lorsque des atomes qui vont constituer les nanoparticules sont bombardés à grande vitesse sur le substrat (où ils vont se fixer), sous la forme d'un flux gazeux ;
- les procédés chimiques ou physico-chimiques :
   ▪ la microémulsion ;
   ▪ l'impulsion laser en solution, lorsqu'une solution contenant un précurseur est irradiée par faisceau laser. Les nanoparticules se forment dans la solution le long du faisceau lumineux ;
   ▪ La synthèse par irradiation aux microondes ;
   ▪ La synthèse orientée assistée par des surfactants ;
   ▪ La synthèse sous ultrasons ;
   ▪ La synthèse électrochimique ;
   ▪ La synthèse organométallique ;
   ▪ La synthèse en milieu alcoolique ;
   ▪ La chimie sol-gel ;
   ▪ La synthèse en oxydo-réduction.

Les synthèses physiques consomment plus de matières premières avec des pertes significatives. Elles nécessitent généralement du temps et des températures élevées ce qui les rendent peu attractives pour le passage à une production à l'échelle industrielle. Cela les rend non adaptées à certains substrats, par exemple les substrats souples. De plus, les synthèses s'effectuent directement sur les substrats dans des bâtis aux dimensions réduites. Ces modes de productions se révèlent relativement rigides et ne permettent pas de produire sur des substrats de grandes dimensions.

Les synthèses chimiques quant à elles possèdent de nombreux avantages. Le premier est de travailler en solution, les nanoparticules conductrices obtenues ainsi sont déjà dispersées dans un solvant ce qui en facilite le stockage et l'utilisation. Dans la plupart des cas, les nanoparticules ne sont pas fixées à un substrat ce qui amène plus de latitude dans leur utilisation. Ces méthodes permettent aussi un meilleur contrôle des matières premières mises en jeu et limitent des pertes. Un bon ajustement des paramètres de synthèse conduit à un bon contrôle de la synthèse et la cinétique de croissance des nanoparticules conductrices. Ceci permet de garantir une bonne reproductibilité entre les lots ainsi qu'un bon contrôle de la morphologie finale des nanoparticules. La partie délicate est d'obtenir des solutions stables colloïdalement dans le temps sans agrégation des nanoparticules ni précipitation. La customisation de la surface des nanoparticules permet de lutter efficacement contre ce phénomène en choisissant pour cela des entités stabilisantes telles que les ligands. Ces ligands préviennent des risques d'agrégations et de sédimentations. Ils offrent un second avantage en impactant également sur les propriétés de l'encre formulée à base de ces nanoparticules conductrices. Il est ainsi possible d'ajuster la nature des ligands selon l'application visée. Dans le cadre d'application biomédicale, il est ainsi privilégié des ligands tels que des peptides qui augmentent la biocompatibilité des nanoparticules dans le milieu biologique. Dans le cas de la filière de l'électronique imprimée, cela ouvre la voie à l'emploi de substrats de différentes tailles et de différentes natures. Enfin, ces méthodes de synthèse permettent de produire en quantité des solutions stables de nanoparticules dans un délai relativement court. Tous ces points soulignent les atouts et la flexibilité des voies de synthèse chimiques pour envisager une production à l'échelle industrielle de nanoparticules.

La présente invention a pour objectif de palier à un ou plusieurs inconvénients de l'art antérieur en fournissant une dispersion de nanoparticules d'argent stable et à forte concentration ainsi qu'une encre comprenant la dite dispersion.

Selon un mode d'exécution de la présente invention, cet objectif est atteint grâce à une dispersion dont la composition comprend au moins :
a. un composé « a » consistant en des nanoparticules d'argent,
b. un composé « b » consistant en un solvant cyclooctane et/ou un solvant de type ester méthylique d'acides gras et/ou un solvant terpénique sélectionné parmi les hydrocarbures et leurs dérivés aldéhydes, cétones et/ou acides terpéniques, et/ou un mélange de deux ou plusieurs des dits solvants,
c. un composé « c » consistant en un agent dispersant, et
d. un composé « d » consistant en un agent dispersant différent du composé c utilisé.

La Demanderesse a découvert de manière inattendue que la combinaison spécifique des composants de la dispersion selon la présente invention permettait d'obtenir des dispersions de nanoparticules d'argent à fortes concentrations et à stabilité améliorée.

La présente invention concerne donc également une encre dont la composition comprend au moins
1. une dispersion conforme à la présente invention (avec les composés « a », « b », « c » et « d »),
2. un composé « e » consistant en un solvant différent du composé « b » utilisé, et
3. un composé « f » optionnel consistant en un agent modificateur de rhéologie.

US2010143591 décrit une composition d'encre qui comprend des nanoparticules d'argent, un solvant hydrocarboné et un co-solvant alcool. La composition d'encre convient à l'impression de lignes conductrices uniformes, lisses et étroites sur diverses surfaces de substrat. WO2012171934 concerne une composition imprimable conductrice de courant électrique qui comprend des particules d'argent, un agent dispersant, un solvant, un premier agent tensio-actif et un deuxième agent tensio-actif à base de fluor. Les compositions décrites dans WO2012171934 comprennent de l'eau à une teneur supérieure à 30% en poids. Les solvants décrits sont sélectionnés parmi les 1,2-propanediol, 2-pyrrolidone, éthylène glycol et 2-methyl-1, 3 propanediol.

La viscosité de l'encre selon la présente invention est de préférence comprise entre 1 et 10 000 mPa.s, plus préférentiellement comprise entre 1 et 1 000 mPa.s, par exemple comprise entre 2 et 20 mPa.s.

La Demanderesse a découvert que la combinaison de la dispersion selon la présente invention avec les composés « e » et optionnel « f » permettait l'obtention d'une encre aux propriétés améliorées, en particulier une meilleure stabilité.

Ceci rend cette encre particulièrement attractive pour des utilisations dans les domaines de l'électronique imprimée (par exemple les supports RFID (Identification par Radio Fréquence)), du photovoltaïque, des OLED (diode électroluminescente organique), des capteurs (par exemple des capteurs de gaz), des dalles tactiles, des biocapteurs, et des technologies sans contact (« contactless technologies »).

Le composé « a » selon la présente invention consiste donc en des nanoparticules d'argent.

Selon une variante de réalisation de la présente invention, les objectifs de la présente invention sont particulièrement bien atteints lorsque le composé « a » est constitué de nanoparticules d'argent dont les dimensions sont comprises entre 1 et 50 nm, de préférence entre 2 et 20 nm. La taille des nanoparticules est définie comme étant le diamètre moyen des particules contenant de l'argent, à l'exclusion des stabilisants, tel que déterminé par exemple par microscopie électronique par transmission.

Selon une variante de réalisation de la présente invention, les nanoparticules d'argent sont de forme sphéroïdale et/ou sphérique. Pour la présente invention et les revendications qui suivent, le terme « de forme sphéroïdale » signifie que la forme ressemble à celle d'une sphère mais elle n'est pas parfaitement ronde (« quasi-sphérique »), par exemple une forme ellipsoïdale. La forme des nanoparticules est généralement identifiée au moyen de photographies prises par microscope. Ainsi, selon cette variante de réalisation de la présente invention, les nanoparticules ont des diamètres compris entre 1 et 50 nm, de préférence entre 2 et 20 nm.

Selon un mode d'exécution particulier de la présente invention, les nanoparticules d'argent ont été préalablement synthétisées par synthèse chimique. Toute synthèse chimique peut être préférentiellement utilisée dans le cadre de la présente invention. Dans un mode d'exécution préféré selon la présente invention les nanoparticules d'argent sont obtenues par une synthèse chimique qui utilise comme précurseur d'argent un sel d'argent organique ou inorganique. A titre d'exemple non limitatif, on citera l'acétate d'argent, le nitrate d'argent, le carbonate d'argent, le phosphate d'argent, le trifluorate d'argent, le chlorure d'argent, le perchlorate d'argent, seuls ou en mélange. Selon une variante préférée de la présente invention, le précurseur est de l'acétate d'argent.

Selon un mode d'exécution préféré de la présente invention, les nanoparticules d'argent sont donc synthétisées par synthèse chimique, par réduction du précurseur d'argent au moyen d'un agent réducteur en présence de l'agent dispersant dénommé le composé « c » de la présente invention ; cette réduction peut s'effectuer en absence ou en présence d'un solvant (dénommé aussi par la suite le « solvant de synthèse »). Lorsque la synthèse est effectuée en absence de solvant, l'agent dispersant agit généralement à la fois en tant qu'agent dispersant et en tant que solvant du précurseur d'argent ; un exemple particulier de synthèse de nanoparticules en milieu sans solvant et de préparation de la dispersion selon la présente invention est décrit à titre illustratif ci-après.

Préparation de la dispersion des nanoparticules dans le solvant « b » : dans un réacteur contenant de l'acétate d'argent, l'agent dispersant de synthèse (composé « c » ; par exemple la dodécylamine) est ajouté en excès et le mélange est agité moins de 30 minutes à 65°C. L'agent réducteur hydrazine est ensuite ajouté rapidement au mélange et l'ensemble est laissé sous agitation environ 60 minutes. Le mélange est traité par l'ajout de méthanol (ou de tout autre solvant approprié, par exemple un autre alcool monohydrique ayant de 2 à 3 atomes de carbone, par exemple de l'éthanol) et le surnageant est éliminé au cours de plusieurs lavages successifs (les nanoparticules d'argent ainsi formées restent donc à l'état de dispersion et au contact de liquide). Le solvant cyclooctane (composé « b ») est ajouté et le méthanol résiduel est évaporé. Le composé « d » (un agent dispersant différent du compose « b » utilisé ; par exemple une octylamine) est ensuite ajouté et le mélange est agité pendant 15 minutes à température ambiante. Les dispersions de nanoparticules d'argent ainsi obtenues sont utilisées directement pour la formulation des encres conductrices.

En général, lorsque la synthèse est effectuée en présence de solvant, le précurseur d'argent est dissout dans le dit solvant de synthèse ; de préférence, ce solvant de synthèse est différent du composé « b » (dénommé aussi par la suite le « solvant de dispersion »). Le solvant de synthèse est de préférence un solvant organique choisi parmi la liste suivante d'hydrocarbures:
- les alcanes ayant de 5 à 20 atomes de carbone dont on citera à titre illustratif les Pentane (C5H12), Hexane (C6H14), Heptane (C7H16), Octane (C8H18), Nonane (C9H20), Décane (C10H22), Undécane (C11H24), Dodécane (C12H26), Tridécane (C13H28), Tétradécane (C14H30), Pentadécane (C15H32), Cétane (C16H34), Heptadécane (C17H36), Octadécane (C18H38), Nonadécane (C19H40), Eicosane (C20H42), cyclopentane (C5H10), cyclohexane (C6H12), méthylcyclohexane (C7H14) ; cycloheptane (C7H14), cyclooctane (C8H16) (de préférence lorsqu'il n'est pas utilisé comme composé « b »), cyclononane (C9H18), cyclodécane (C10H20) ;
- les hydrocarbures aromatiques ayant de 7 à 18 atomes de carbone dont on citera à titre illustratif les toluène, xylène, éthylbenzène, éthyltoluène ; et
- leurs mélanges.

Selon un mode d'exécution essentiel de la présente invention, au moins un agent dispersant (le composé « c ») est également présent en addition du précurseur d'argent (et du solvant de synthèse lorsque ce dernier est utilisé).

Cet agent dispersant, que nous appellerons agent dispersant de synthèse correspondant au composé « c » précité est de préférence choisi parmi la liste des agents dispersants décrits ci-après dans la présente description.

Selon un mode d'exécution préféré de la présente invention, les nanoparticules d'argent sont donc synthétisées par synthèse chimique, par réduction du précurseur d'argent au moyen d'un agent réducteur en présence de l'agent dispersant de synthèse (le composé « c »), le tout s'effectuant de préférence dans le solvant de synthèse. Cette synthèse s'effectue de préférence dans des conditions de pression et de température non contraignantes telles que définies ci-après dans la présente description.

L'agent réducteur pourra être sélectionné parmi une large gamme de composés permettant la réduction du précurseur d'argent. On citera à titre illustratif les composés suivants : l'hydrogène ; les hydrures, parmi lesquels nous citerons à titre d'exemple les NaBH4, LiBH4, KBH4, et le borohydure de tétrabutylammonium ; les hydrazines, parmi lesquels nous citerons à titre d'exemple les hydrazine (H2N-NH2), hydrazine substituée (méthylhydrazine, phénylhydrazine, dimétylhydrazine, diphénylhydrazine, etc...), sel d'hydrazine (substituée), etc... ; les amines, parmi lesquels nous citerons à titre d'exemple les triméthylamine, triéthylamine, etc... ; et leurs mélanges.

En général, après l'étape de réduction, les nanoparticules sont ensuite soumises à une étape de lavage/purification qui permet d'éliminer tout ce qui n'est pas chimiquement ou physiquement lié aux nanoparticules.

Selon un mode d'exécution particulier de la présente invention, une phase liquide est toujours présente, à la fois lors de l'étape de réduction du précurseur d'argent ainsi que lors de toutes les étapes (par exemple les étapes de lavage et purification susmentionnées) qui précèdent l'ajout du composé « b ». En d'autres termes, une caractéristique préférée selon la présente invention consiste en ce que les nanoparticules d'argent ne soient jamais isolées et séchées ; elles restent donc de préférence toujours en contact avec une phase liquide (par exemple un solvant) dans laquelle elles sont dispersées. Comme démontré plus avant dans la description, cette caractéristique permet d'améliorer considérablement certaines propriétés (monodispersion, homogénéité, stabilité et recuit à plus basse température) des nanoparticules d'argent. Cette approche permet de supprimer l'étape d'isolation des nanoparticules ce qui a un impact positif en termes de coûts de production et d'hygiène et sécurité des personnes.

Le composé « b » selon la présente invention consiste donc en un solvant cyclooctane et/ou un solvant de type ester méthylique d'acides gras et/ou un solvant terpénique sélectionné parmi les hydrocarbures et leurs dérivés aldéhydes, cétones et/ou acides terpéniques, et/ou un mélange de deux ou plusieurs des dits solvants.

Le solvant de type ester méthylique d'acides gras est de préférence à chaine hydrocarbonée courte ; par exemple une chaine comprenant entre 4 et 8 atomes de carbone. On citera à titre d'exemples les butanoate de méthyle, hexanoate de méthyle, et/ou octanoate de méthyle.

Le solvant terpénique est de préférence de type monoterpène. On citera à titre d'exemples les hydrocarbures ainsi que leurs dérivés (aldéhydes, cétones et acides) terpéniques, de préférence les hydrocarbures terpéniques. On citera à titre d'exemples les limonène, menthone, camphre, myrcène, alpha-pinène, et/ou béta-pinène.

Les composés « c » (agent dispersant de synthèse) et « d » (agent dispersant) selon la présente invention consistent donc en des agents dispersants caractérisés en ce que l'agent dispersant « d » est différent de l'agent « c » utilisé. Cette différence s'affiche par une chimie différente ; nous citerons à titre illustratif une longueur de chaine carbonée différente (par exemple une différence d'au moins deux atomes de carbone dans la chaine), et/ou un composé à chaine carbonée linéaire et l'autre pas, et/ou un composé à chaine carbonée cyclique et l'autre pas et/ou un composé à chaine carbonée aromatique et l'autre pas. Selon un mode d'exécution préféré de la présente invention, le composé « c » possède une masse moléculaire et/ou une longueur de chaine carbonée au moins 20% supérieure à celle du composé « d », par exemple au moins 40% supérieure.

Ces agents dispersants peuvent avantageusement être sélectionnés parmi les familles des agents dispersants organiques qui comprennent au moins un atome de carbone. Ces agents dispersants organiques peuvent aussi comprendre un ou plusieurs hétéroatomes non métalliques tels qu'un composé halogéné, l'azote, l'oxygène, le soufre, le silicium.

On citera à titre illustratif les thiols et leurs dérivés, les amines et leurs dérivés (par exemple les amino alcools et les éthers d'amino alcools), les acides carboxyliques et leurs dérivés carboxylates, les polyéthylène glycols, et/ou leurs mélanges.

Dans une variante de réalisation préférée de la présente invention, les agents dispersants organiques « c » et « d » seront sélectionnés dans le groupe constitué par les amines telles que par exemple la propylamine, la butylamine, la pentylamine, l'hexylamine, l'heptylamine, l'octylamine, la nonylamine, la décylamine, l'undécylamine, la dodécylamine, la tridécylamine, la tetradécylamine, l'hexadécylamine, le diaminopentane, le diaminohexane, le diaminoheptane, le diaminooctane, le diaminononane, le diaminodécane , la dipropylamine, la dibutylamine, la dipentylamine, la dihexylamine, la diheptylamine, la dioctylamine, la dinonylamine, la didécylamine, la méthylpropylamine, l'éthylpropylamine, la propylbutylamine, l'éthylbutylamine, l'éthylpentylamine, la propylpentylamine, la butylpentylamine, la tributylamine, la trihexylamine, ou leurs mélanges.

Selon un mode d'exécution préféré de la présente invention, les composés « b » et « d » sont rajoutés aux nanoparticules d'argent déjà synthétisées en présence du composé « c ».

Ce rajout se passe généralement après les étapes de lavage/purification des nanoparticules comme décrit dans la présente description.

Un exemple particulier de synthèse de nanoparticules et de préparation de la dispersion selon la présente invention est décrit à titre illustratif ci-après :
Préparation de la dispersion des nanoparticules dans le solvant « b ».
Dans un réacteur contenant de l'acétate d'argent dans le toluène, l'agent dispersant de synthèse (composé « c » ; par exemple la dodécylamine) est ajouté et le mélange est agité moins de 30 minutes à 65°C. L'agent réducteur hydrazine est ensuite ajouté rapidement au mélange et l'ensemble est laissé sous agitation environ 60 minutes. Le mélange est traité par l'ajout de méthanol (ou de tout autre solvant approprié, par exemple un autre alcool monohydrique ayant de 2 à 3 atomes de carbone, par exemple de l'éthanol) et le surnageant est éliminé au cours de trois lavages successifs (les nanoparticules d'argent ainsi formées restent donc à l'état de dispersion et au contact de liquide, en l'occurrence au contact de méthanol). Le solvant cyclooctane (composé « b ») est ajouté et le méthanol résiduel est évaporé. Le composé « d » (un agent dispersant différent du compose « b » utilisé ; par exemple une octylamine) est ensuite ajouté et le mélange est agité pendant 15 minutes à température ambiante. Les dispersions de nanoparticules d'argent ainsi obtenues sont utilisées directement pour la formulation des encres conductrices.

Selon une variante préférée de réalisation de la présente invention les nanoparticules qui sont utilisées sont caractérisées par des valeurs de D50 (pouvant être mesurées par exemple au moyen de la méthode décrite ci-après) qui sont préférentiellement comprises entre 2 et 12 nm.

Pour les nanoparticules synthétisées en présence de solvant la gamme préférée de D50 sera entre 2 et 8 nm ; pour les nanoparticules synthétisées en absence de solvant la gamme préférée de D50 sera entre 5 et 12 nm.

La dispersion ainsi obtenue pourra être utilisée directement ou bien diluée afin d'obtenir les propriétés souhaitées avant d'être incorporée, par exemple, dans une encre. Toutefois, et ceci représente un avantage considérable des dispersions selon la présente invention, les dites dispersions sont caractérisées par une stabilité supérieure (avant dilution) comme démontrée dans les exemples.

Selon un mode d'exécution de la présente invention, la dispersion de nanoparticules d'argent comprend
- un composé « a » dans une teneur supérieure à 30 % en poids, de préférence supérieure à 35 % en poids, par exemple supérieure à 40 % en poids,
- un composé « b » dans une teneur comprise entre 20 et 65 % en poids, de préférence entre 40 et 60 % en poids,
- un composé « c » dans une teneur comprise entre 3 et 15 % en poids, de préférence entre 3 et 10 % en poids, et
- un composé « d » dans une teneur comprise entre 0,1 et 15 % en poids, de préférence entre 0,4 et 5 % en poids.

Selon un mode d'exécution de la présente invention, la dispersion de nanoparticules d'argent peut également intégrer dans sa composition des composés additionnels parmi lesquels nous citerons à titre d'exemple des solvants (par exemple des éthers, des alcools, des esters) et/ou des additifs (par exemple des polymères) dont l'objectif peut être par exemple l'amélioration de la dispersion des nanoparticules. Toutefois, les composés « a », « b », « c », et « d » (dans les gammes de proportions indiquées ci-dessus) constitueront de préférence au moins 55% en poids de la dispersion finale, de préférence au moins 75% en poids, par exemple au moins 90% en poids, au moins 95% en poids, au moins 99% en poids, ou même 100% en poids de la dispersion finale.

Selon un mode d'exécution de la présente invention, la dispersion de nanoparticules d'argent n'intègre pas d'eau dans sa composition. Toutefois, comme les composants de la dispersion peuvent tolérer des traces d'eau en fonction de leur degré de pureté, il va de soi que la somme de ces traces d'eau correspondantes seront acceptables dans les dispersions de nanoparticules d'argent selon la présente invention. Ainsi, la teneur en eau dans la dispersion finale dépend en général essentiellement de la teneur en eau des solvants utilisés pour sa préparation ; l'alcool monohydrique (le méthanol de lavage de la dispersion dans notre exemple de réalisation ci-dessus) aura à ce citre l'impact le plus important - par comparaison avec les autres solvants utilisés lors de la préparation de la dispersion - sur la teneur finale en eau de la dispersion. Selon un mode d'exécution particulier de la présente invention, les dispersions de nanoparticules d'argent comprennent des concentrations en eau inférieures à 2 % en poids, de préférence inférieures à 1% en poids, par exemple inférieures à 0,5% en poids, ou même inférieures à 0,2% en poids.

Selon un mode d'exécution préféré de la présente invention, à l'exception des traces d'eau éventuellement présentes dans les composés de formulation/préparation de la dispersion, de l'eau n'est pas ajoutée lors de la formulation de dispersions de nanoparticules d'argent.

Le composé « e » présent dans l'encre selon la présente invention consiste donc en un solvant différent du composé « b » utilisé (cyclooctane et/ou ester méthylique d'acides gras et/ou solvant terpénique).

Ce composé solvant « e » est de préférence caractérisé par une polarité plus élevée que le solvant de dispersion utilisé et/ou un point d'ébullition inférieur à 260°C. Il appartient de préférence à la catégorie des alcools et/ou des dérivés d'alcools (par exemple les éthers de glycol). On citera à titre d'exemples les alcools monohydriques (par exemple les isopropanol, butanol, pentanol, hexanol,....) et/ou les glycols (par exemple les ethylène glycol, propylène glycol, diethylène glycol.....), et/ou les éthers de glycols (par exemple les mono- ou di-éthers de glycols parmi lesquels nous citerons à titre d'exemple les éthylène glycol propyl éther, éthylène glycol butyle éther, éthylène glycol phényl éther, di éthylène glycol méthyl éther, di éthylène glycol éthyle éther, di éthylène glycol propyl éther, di éthylène glycol butyle éther, propylène glycol méthyle éther, propylène glycol butyle éther, propylène glycol propyl éther, éthylène glycol di-méthyl éther, éthylène glycol di-éthyle éther, éthylène glycol di-butyle éther, glymes, éther di éthylique de di éthylène-glycol, éther di éthylique de di butylène-glycol, diglymes, éthyle diglyme, butyle diglyme), et/ou les acétates d'éther de glycols (par exemple, les acétate de 2-Butoxyéthyle, di éthylène glycol monoethyl éther acétate, di éthylène glycol butylether acétate, propylène glycol méthyle éther acétate), et/ou un mélange de deux ou plusieurs des dits solvants précités.

Le composé « f » optionnel selon la présente invention consiste donc en un agent modificateur de rhéologie. On citera à titre d'exemple les alkyle-cellulose, de préférence l'éthylcellulose, les nitro-celluloses, les résines alkydes et acryliques et les urées modifiées, de préférence les polyurées, et/ou leurs mélanges.

Selon un mode d'exécution particulier de la présente invention, les compositions d'encres peuvent également comprendre un solvant additionnel, que nous appellerons solvant « X » et qui pourra être avantageusement sélectionné parmi un ou plusieurs des solvants de synthèse des nanoparticules et/ou des solvants « b » de dispersion précités et/ou un mélange de deux ou plusieurs des dits solvants. L'utilisation de ce(s) solvant(s) additionnel(s) est particulièrement avantageuse pour la mise en oeuvre du composé « f » lorsque ce dernier est utilisé dans la composition de l'encre selon la présente invention. Selon un mode d'exécution particulier selon la présente invention, le solvant « X » est identique au solvant « b » utilisé.

Un exemple particulier de préparation de l'encre selon la présente invention est décrit à titre illustratif ci-après : dans un réacteur contenant un mélange de solvant « e » et « X » (butanol et cyclooctane), est ajouté sous agitation et à température ambiante un agent modificateur de rhéologie de type polyurée (composé « f »). La solution de nanoparticules d'argent en dispersion (mélange des composés « a », « b », « c », et « d ») est ajoutée et l'ensemble est agité pendant 15 min à température ambiante.

Selon un mode d'exécution particulier de la présente invention, les encres formulées selon la présente invention contiennent une teneur inférieure à 60% en poids de nanoparticules (composé « a »), de préférence entre 5 et 45%, et plus particulièrement entre 10 et 40% en poids.

Selon un mode d'exécution de la présente invention, l'encre d'argent comprend
- une dispersion conforme à la présente invention (avec les composés « a », « b », « c » et « d »), dans une teneur inférieure ou égale à 60 % en poids, et de préférence supérieure à 5 % en poids, de préférence supérieure à 10 % en poids, par exemple supérieure à 20 % en poids et même supérieure à 40 % en poids,
- un composé « e » dans une teneur comprise entre 1 et 40 % en poids, de préférence entre 15 et 30 % en poids,
- un composé « f » optionnel dans une teneur inférieure à 20 % en poids, de préférence entre 0,1 et 2 % en poids, et
- un composé « X » optionnel dans une teneur inférieure à 60 % en poids, de préférence inférieure à 40% en poids, et de préférence supérieure à 5 % en poids, par exemple supérieure à 15% en poids.

Selon un mode d'exécution de la présente invention, l'encre peut également intégrer dans sa composition d'autres composés parmi lesquels nous citerons à titre d'exemple des additifs (par exemple, un additif de la famille des silanes) dont l'objectif peut par exemple être d'améliorer la tenue à différents type de stress mécanique, par exemple l'adhérence sur de nombreux substrats ; on pourra citer à titre d'illustration les substrats suivants : polyimide, polycarbonate, polyethertetphtalate PET), polyéthylène naphthalate (PEN), polyaryléthercétone, polyester, polyester thermostabilisé, verre, verre ITO, verre AZO, verre SiN.

Toutefois, les composés « a », « b », « c », « d », « e », « f » et « X » (dans les gammes de proportions indiquées ci-dessus) constitueront de préférence au moins 50% en poids de l'encre finale, de préférence au moins 75% en poids, par exemple au moins 90% en poids, au moins 95% en poids, au moins 99% en poids, ou même 100% en poids de l'encre finale.

Selon un mode d'exécution de la présente invention, l'encre n'intègre pas d'eau dans sa composition. Toutefois, comme les composants de l'encre peuvent tolérer des traces d'eau en fonction de leur degré de pureté, il va de soi que la somme de ces traces d'eau correspondantes seront acceptables dans les encres selon la présente invention. Ainsi, la teneur en eau dans l'encre finale dépend en général essentiellement de la teneur en eau des solvants utilisés pour sa préparation ; l'alcool monohydrique (le méthanol de lavage de la dispersion dans notre exemple de réalisation ci-dessus) aura à ce citre l'impact le plus important - par comparaison avec les autres solvants utilisés lors de la préparation de l'encre - sur la teneur finale en eau de l'encre. Selon un mode d'exécution particulier de la présente invention, les encres comprennent des concentrations en eau inférieures à 2 % en poids, de préférence inférieures à 1% en poids, par exemple inférieures à 0,5% en poids, ou même inférieures à 0,2% en poids.

Selon un mode d'exécution préféré de la présente invention, à l'exception des traces d'eau éventuellement présentes dans les composés de formulation/préparation de l'encre, de l'eau n'est pas ajoutée lors de la formulation des encres.

Selon une variante de réalisation de la présente invention, la préparation de la dispersion de nanoparticules selon la présente invention est caractérisée par les étapes suivantes :
a. synthèse des nanoparticules d'argent en présence de l'agent dispersant (composé « c ») par réduction au moyen d'un agent réducteur d'un précurseur d'argent ;
b. lavage/purification des nanoparticules obtenues à l'étape « a »,
c. additions du composé « b » et du composé « d ».

Selon une variante de réalisation préférée de la présente invention, une phase liquide est toujours présente lors de toutes ces étapes de préparation. En d'autres termes, une caractéristique préférée selon la présente invention consiste en ce que les nanoparticules d'argent ne soient jamais isolées et séchées ; elles restent donc de préférence toujours en contact avec une phase liquide (par exemple un solvant) dans laquelle elles sont dispersées.

Selon une variante de réalisation préférée de la présente invention, lors de l'étape « a », l'addition de l'agent réducteur s'effectue dans tout récipient adapté (par exemple un réacteur) avec la caractéristique qu'elle s'effectue sous-niveau, par exemple à l'aide d'un plongeur directement introduit dans le milieu réactionnel.

Un avantage additionnel de la dispersion selon la présente invention réside dans le fait que sa préparation peut être effectuée à des conditions de pression et/ou de température non contraignantes, par exemple à des conditions de pression et/ou de température proches aux conditions normales ou ambiantes. Il est préférable de rester à moins de 40% des conditions normales ou ambiantes de pression et, en ce qui concerne la température, cette dernière est généralement inférieure à 80°C, de préférence inférieure à 70°C. Par exemple, la Demanderesse a constaté qu'il était préférable de maintenir les conditions de pression durant la préparation de la dispersion à des valeurs oscillant au maximum de 30%, de préférence de 15% autour des valeurs des conditions de pression normales ou ambiantes, de préférence proche de la pression atmosphérique. Un contrôle de ces conditions de pression et/ou de température peut donc être avantageusement inclus dans le dispositif de préparation de la dispersion de manière à remplir ces conditions.

Cet avantage lié à une préparation de la dispersion dans des conditions non contraignantes se traduit bien évidemment également par une utilisation facilitée des dites dispersions.

Selon une variante de réalisation de la présente invention, la préparation de l'encre à base de nanoparticules selon la présente invention est caractérisée par les étapes consécutives suivantes :
a. introduction du composé « e » dans un récipient, et
b. addition de la dispersion selon la présente invention dans le dit récipient.

L'encre ainsi obtenue pourra être utilisée directement ou bien diluée afin d'obtenir les propriétés souhaitées.

Selon un mode d'exécution particulier de la présente invention, lorsqu'un agent modificateur de rhéologie (composé « f ») est utilisé dans la composition de l'encre, les dites formulations d'encres comprennent de préférence un solvant additionnel (solvant « X »). Dans ce mode d'exécution particulier, la préparation de l'encre à base de nanoparticules selon la présente invention est caractérisée par les étapes consécutives suivantes :
a. mise en oeuvre du composé « f » dans un mélange de composés « e » et « X », et
b. addition de la dispersion selon la présente invention.

Un avantage additionnel de l'encre selon la présente invention réside dans le fait que sa préparation peut être effectuée à des conditions de pression et/ou de température non contraignantes, par exemple à des conditions de pression et/ou de température proches ou identiques aux conditions normales ou ambiantes. Il est préférable de rester à moins de 40% des conditions normales ou ambiantes de pression et/ou de température. Par exemple, la Demanderesse a constaté qu'il était préférable de maintenir les conditions de pression et/ou de température durant la préparation de l'encre à des valeurs oscillant au maximum de 30%, de préférence de 15% autour des valeurs des conditions normales ou ambiantes. Un contrôle de ces conditions de pression et/ou de température peut donc être avantageusement inclus dans le dispositif de préparation de l'encre de manière à remplir ces conditions. Cet avantage lié à une préparation de l'encre dans des conditions non contraignantes se traduit bien évidemment également par une utilisation facilitée des dites encres.

Selon un mode d'exécution de la présente invention, l'encre peut avantageusement être utilisée dans toute méthode d'impression, en particulier jet d'encre, spray, sérigraphie, héliogravure, flexographie, doctor blade, spin coating, et slot die coating.

Il est donc évident pour l'homme de l'art que la présente invention permet des modes de réalisation sous de nombreuses autres formes spécifiques sans pour autant s'éloigner du domaine d'application de l'invention tel que revendiqué. Par conséquent, les présents modes de réalisation doivent être considérés à titre d'illustration mais peuvent être modifiés dans le domaine défini par la portée des revendications jointes.

La présente invention et ses avantages seront à présent illustrés au moyen des formulations reprises dans le tableau ci-dessous. La synthèse des dispersions (en présence de solvant de synthèse - du toluène) et les formulations d'encres ont été préparées conformément aux modes d'exécution préférés décrits ci-dessus dans la description. Les composés chimiques utilisés sont indiqués dans la deuxième colonne du tableau.

La résistance carrée de l'encre telle que mentionnée dans la présente invention pourra être mesurée selon toute méthode appropriée. A titre d'exemple correspondant aux mesures reprises dans le tableau, elle peut être avantageusement mesurée selon la méthode suivante :
Une encre déposée par spincoater sur un substrat (600 tour minute / 3 min - par exemple du verre), est soumise à un recuit à l'aide d'une plaque chauffante ou d'un four. Une analyse de la résistance carrée est réalisée dans les conditions suivantes :
Référence de l'appareil : S302 Resistivity Stand
Référence tête 4 pointes : SP4-40045TFY
Référence source de courant : Agilent U8001A
Référence multimètre : Agilent U3400
Température de mesure : température ambiante
Coefficient conversion tension/résistance : 4,5324
   - Exemple 1(formulation 1 du tableau ci-dessous) : 50 mohms/sq pour une épaisseur de 1,3 µm sur polyimide ou polyester - 150°C/30 min.

Selon une variante de réalisation de la présente invention, la Demanderesse a découvert que les valeurs de résistance carrée (mesurée comme décrit ci-dessus) des encres obtenues conformément à la présente invention étaient de préférence inférieures à 100 mohms/sq pour des épaisseurs supérieures ou égales à 1 µm (température de recuit de 150°C). Cette propriété particulière de résistance carrée confère aux encres de la présente invention une conductivité améliorée pour des températures de recuit inférieures à 200°C et plus particulièrement pour des températures de recuit inférieures ou égales à 150°C (comme démontré dans l'exemple et la mesure).

La teneur en nanoparticules d'argent telle que mentionnée dans la présente invention pourra être mesurée selon toute mesure appropriée. A titre d'exemple correspondant aux mesures reprises dans le tableau, elle peut être avantageusement mesurée selon la méthode suivante :
Analyse thermogravimétrique
Appareil : TGA Q50 de TA Instrument
Creuset : Alumine
Méthode : rampe
Plage de mesure : de température ambiante à 600°C
Montée en température : 10°C/min

La distribution des tailles des nanoparticules d'argent (dans la dispersion D50) telle que mentionnée dans la présente invention pourra être mesurée selon toute méthode appropriée. A titre d'exemple, elle peut être avantageusement mesurée selon la méthode suivante : utilisation d'un appareil de type Nanosizer S de Malvern avec les caractéristiques suivantes :
Méthode de mesure DLS (Dynamic light scattering) :
- Type de cuve : verre optique
- Matériel : Ag
- Indice de réfraction des nanoparticules : 0,54
- Absorption : 0,001
- Dispersant : Cyclooctane
- Température : 20 °C
- Viscosité : 2.133
- Indice de réfraction dispersant : 1,458
- General Options : Mark-Houwink parameters
- Analysis Model : General purpose
- Equilibration : 120 s
- Nombre de mesure : 4

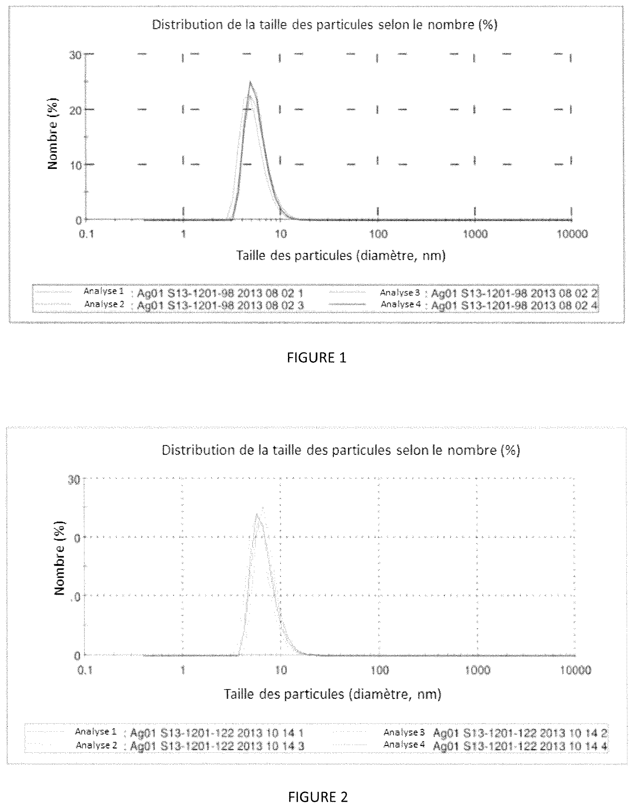

Les figures 1 et 2 sont représentatives d'exemple général de spectre DLS (Dynamic light scattering) obtenu lors de la synthèse des nanoparticules selon la présente invention respectivement avec solvant de synthèse (figure 1) et sans solvant de synthèse (figure 2). On peut y voir les spectres granulométriques en nombre de la taille (en nm) des nanoparticules d'argent.
Figure 1 - D50 : 5,6 nm
Figure 2 - D50 : 8,0 nm
D₅₀ est le diamètre pour lequel 50% des nanoparticules d'argent en nombre sont plus petits. Cette valeur est considérée comme représentative de la taille moyenne des grains.

La viscosité de l'encre telle que mentionnée dans la présente invention pourra être mesurée selon toute méthode appropriée. A titre d'exemple, elle peut être avantageusement mesurée selon la méthode suivante :
Appareil : Rhéomètre AR-G2 de TA Instrument
Temps de conditionnement : 1 minute pour les formulations 1, 2 et 3 et 30 minutes pour la formulation 4
Type de test : Rampe continue
Rampe : Vitesse de cisaillement (1/s)
De : 0,001 à 40 (1/s)
Durée : 5 minutes
Mode : linéaire
Mesure : toutes les 10 secondes
Température : 20°C
Méthode de retraitement de la courbe : Newtonien
Zone retraitée : toute la courbe

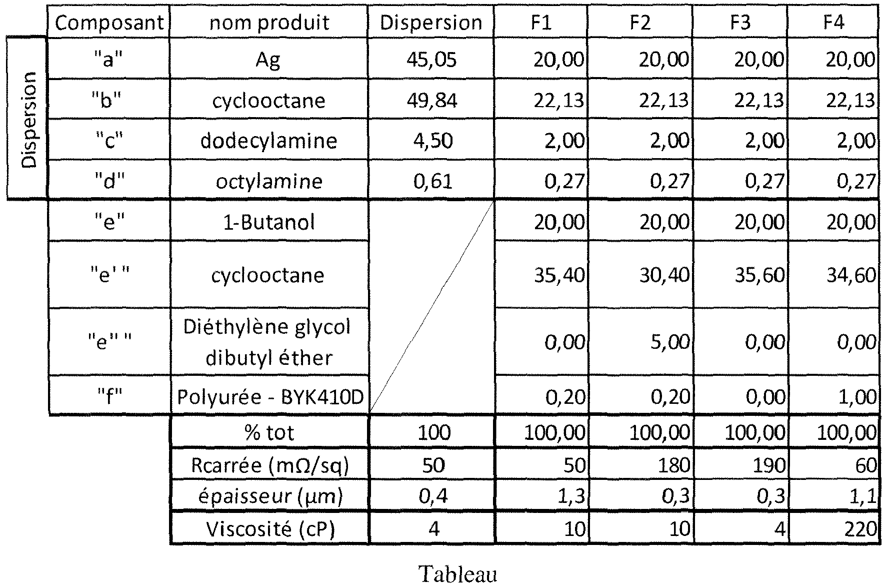

## Revendications

1. Dispersion à base de nanoparticules d'argent dont la composition comprend au moins :
a. un composé « a » consistant en des nanoparticules d'argent,
b. un composé « b » consistant en un solvant cyclooctane et/ou un solvant de type ester méthylique d'acides gras et/ou un solvant terpénique sélectionné parmi les hydrocarbures et leurs dérivés aldéhydes, cétones et/ou acides terpéniques, et/ou un mélange de deux ou plusieurs des dits solvants,
c. un composé « c » consistant en un agent dispersant, et
d. un composé « d » consistant en un agent dispersant différent du composé « c » utilisé.

2. Dispersion selon la revendication précédente **caractérisée en ce que** les agents dispersants organiques « c » et « d » sont des amines, de préférence des amines sélectionnées parmi le groupe constitué de la propylamine, la butylamine, la pentylamine, l'hexylamine, l'heptylamine, l'octylamine, la nonylamine, la décylamine, l'undécylamine, la dodécylamine, la tridécylamine, la tetradécylamine, l'hexadécylamine, le diaminopentane, le diaminohexane, le diaminoheptane, le diaminooctane, le diaminononane, le diaminodécane , la dipropylamine, la dibutylamine, la dipentylamine, la dihexylamine, la diheptylamine, la dioctylamine, la dinonylamine, la didécylamine, la méthylpropylamine, l'éthylpropylamine, la propylbutylamine, l'éthylbutylamine, l'éthylpentylamine, la propylpentylamine, la butylpentylamine, la tributylamine, la trihexylamine, ou un mélange de deux ou plusieurs de ces composés.

3. Dispersion selon l'une quelconque des revendications précédentes **caractérisée en ce qu'**elle comprend
• le composé « a » dans une teneur supérieure à 30 % en poids, de préférence supérieure à 35 % en poids, par exemple supérieure à 40 % en poids,
• le composé « b » dans une teneur comprise entre 20 et 65 % en poids, de préférence entre 40 et 60 % en poids,
• le composé « c » dans une teneur comprise entre 3 et 15 % en poids, de préférence entre 3 et 10 % en poids, et
• le composé « d » dans une teneur comprise entre 0,1 et 15 % en poids, de préférence entre 0,4 et 5 % en poids.

4. Dispersion selon l'une quelconque des revendications précédentes **caractérisée en ce que** les nanoparticules d'argent sont synthétisées par voie chimique par réduction d'un précurseur d'argent en présence d'un solvant de synthèse et **en ce que** le solvant de synthèse utilisé est différent du composé « b » utilisé.

5. Dispersion selon l'une quelconque des revendications précédentes **caractérisée en ce que** les composés « a », « b », « c », et « d » constituent au moins 55% en poids de la dispersion finale, de préférence au moins 75% en poids, par exemple au moins 90% en poids, au moins 95% en poids, au moins 99% en poids, ou même 100% en poids de la dispersion finale.

6. Dispersion selon l'une quelconque des revendications précédentes **caractérisée en ce qu'**elle comprend une teneur en eau inférieure à 2 % en poids, de préférence inférieure à 1% en poids, par exemple inférieure à 0,5% en poids, ou même inférieure à 0,2% en poids.

7. Encre à base de nanoparticules d'argent dont la composition comprend au moins
a. une dispersion selon l'une quelconque des revendications 1 à 6,
b. un composé « e » consistant en un solvant différent du composé « b » utilisé, et
c. un composé « f » optionnel consistant en un agent modificateur de rhéologie.

8. Encre selon la revendication précédente **caractérisée par** une viscosité comprise entre 2 et 20 mPa.s.

9. Encre selon l'une quelconque des revendications 7 et 8 **caractérisée en ce que** le compose « e » est un alcool, de préférence un alcool sectionné parmi le groupe constitué des alcools monohydriques (par exemple les butanol, pentanol, hexanol,....) et/ou des glycols (par exemple les ethylène glycol, propylène glycol, diethylène glycol.....), et/ou des éthers de glycols (par exemple les mono- ou di-éthers de glycols parmi lesquels nous citerons à titre d'exemple les éthylène glycol propyl éther, éthylène glycol butyle éther, éthylène glycol phényl éther, di éthylène glycol méthyl éther, di éthylène glycol éthyle éther, di éthylène glycol propyl éther, di éthylène glycol butyle éther, propylène glycol méthyle éther, propylène glycol butyle éther, propylène glycol propyl éther, éthylène glycol di-méthyl éther, éthylène glycol di-éthyle éther, éthylène glycol di-butyle éther, glymes, éther di éthylique de di éthylène-glycol, éther di éthylique de di butylène-glycol, diglymes, éthyle diglyme, butyle diglyme), et/ou des acétates d'éther de glycols (par exemple, les acétate de 2-Butoxyéthyle, di éthylène glycol monoethyl éther acétate, di éthylène glycol butylether acétate, propylène glycol méthyle éther acétate), et/ou un mélange de deux ou plusieurs des dits solvants.

10. Encre selon l'une quelconque des revendications 7 à 9 **caractérisée en ce que** le composé « f » (agent modificateur de rhéologie) est présent et est sélectionné parmi les alkyle-cellulose, de préférence l'éthylcellulose, les nitro-celluloses, les résines alkydes et acryliques et les urées modifiées, de préférence les polyurées, et/ou leurs mélanges.

11. Encre selon l'une quelconque des revendications 7 à 10 **caractérisée en ce qu'**elle comprend un solvant additionnel, le composé « X », qui est de préférence identique au composé « b ».

12. Encre selon l'une quelconque des revendications 7 à 11 **caractérisée en ce qu'**elle comprend
• la dispersion selon l'une quelconque des revendications 1 à 6 dans une teneur inférieure ou égale à 60 % en poids, et de préférence supérieure à 5 % en poids, de préférence supérieure à 10 % en poids, par exemple supérieure à 20 % en poids
• le composé « e » dans une teneur comprise entre 1 et 40 % en poids, de préférence entre 15 et 30 % en poids,
• le composé « f » optionnel dans une teneur inférieure à 20 % en poids, de préférence entre 0,1 et 2 % en poids, et
• le composé « X » optionnel dans une teneur dans une teneur inférieure à 60 % en poids, de préférence inférieure à 40% en poids, et de préférence supérieure à 5 % en poids, par exemple supérieure à 15 % en poids.

13. Encre selon l'une quelconque des revendications 7 à 12 **caractérisée en ce que** les composés « a », « b », « c », « d », « e », « f » et « X » constituent au moins 50% en poids de l'encre finale, de préférence au moins 75% en poids, par exemple au moins 90% en poids, au moins 95% en poids, au moins 99% en poids, ou même 100% en poids de l'encre finale.

14. Encre selon l'une quelconque des revendications 7 à 13 **caractérisée en ce qu'**elle comprend une teneur en eau inférieure à 2 % en poids, de préférence inférieure à 1% en poids, par exemple inférieure à 0,5% en poids, ou même inférieure à 0,2% en poids.

15. Procédé de préparation de la dispersion de nanoparticules selon l'une quelconque des revendications 1 à 6 **caractérisé par** les étapes suivantes :
a. synthèse des nanoparticules d'argent en présence de l'agent dispersant (composé « c ») par réduction au moyen d'un agent réducteur d'un précurseur d'argent ;
b. lavage/purification des nanoparticules obtenues à l'étape « a »,
c. additions du composé « b » et du composé « d », et
**caractérisé en ce qu'**une phase liquide est toujours présente lors de ces étapes de préparation.

16. Procédé de préparation de l'encre selon l'une quelconque des revendications 7 à 14 **caractérisé en ce que** la dispersion a été préparée selon la revendication 15.

## Patentansprüche

1. Dispersion auf Basis von Silbernanopartikeln, deren Zusammensetzung mindestens Folgendes umfasst:
a. eine Verbindung "a" bestehend aus Silbernanopartikeln,
b. eine Verbindung "b" bestehend aus einem Cyclooctan-Lösungsmittel und/oder einem Lösungsmittel des Typs Fettsäuremethylester und/oder einem Terpen-Lösungsmittel, ausgewählt aus den Kohlenwasserstoffen und deren Aldehyd-Derivaten, Cetonen und/oder Terpensäuren, und/oder einer Mischung aus zwei oder mehreren dieser Lösungsmittel,
c. eine Verbindung "c" bestehend aus einem Dispergiermittel, und
d. eine Verbindung "d" bestehend aus einem anderen Dispergiermittel als der verwendeten Verbindung "c".

2. Dispersion nach dem vorstehenden Anspruch, **dadurch gekennzeichnet, dass** die organischen Dispergiermittel "c" und "d" Amine, vorzugweise Amine, ausgewählt aus der Gruppe bestehend aus Propylamin, Butylamin, Pentylamin, Hexylamin, Heptylamin, Octylamin, Nonylamin, Decylamin, Undecylamin, Dodecylamin, Tridecylamin, Tetradecylamin, Hexadecylamin, Diaminpentan, Diaminhexan, Diaminheptan, Diaminoctan, Diaminnonan, Diamindecan, Dipropylamin, Dibutylamin, Dipentylamin, Dihexylamin, Diheptylamin, Dioctylamin, Dinonylamin, Didecylamin, Methylpropylamin, Ethylpropylamin, Propylbutylamin, Ethylbutylamin, Ethylpentylamin, Propylpentylamin, Butylpentylamin, Tributylamin, Trihexylamin, oder eine Mischung aus zwei oder mehreren dieser Verbindungen sind.

3. Dispersion nach einem der vorstehenden Ansprüche, **dadurch gekennzeichnet, dass** sie Folgendes umfasst:
• die Verbindung "a" mit einem Gehalt von mehr als 30 Gew.-%, vorzugsweise mehr als 35 Gew.-%, beispielsweise mehr als 40 Gew.-%,
• die Verbindung "b" mit einem Gehalt zwischen 20 und 65 Gew.-%, vorzugsweise zwischen 40 und 60 Gew.-%,
• die Verbindung "c" mit einem Gehalt zwischen 3 und 15 Gew.-%, vorzugsweise zwischen 3 und 10 Gew.-%, und
• die Verbindung "d" mit einem Gehalt zwischen 0,1 und 15 Gew.-%, vorzugsweise zwischen 0,4 und 5 Gew.-%.

4. Dispersion nach einem der vorstehenden Ansprüche, **dadurch gekennzeichnet, dass** die Silbernanopartikel chemisch durch Reduzieren einer Silbervorstufe im Beisein eines Syntheselösungsmittels synthetisiert werden und dadurch, dass sich das verwendete Syntheselösungsmittel von der verwendeten Verbindung "b" unterscheidet.

5. Dispersion nach einem der vorstehenden Ansprüche, **dadurch gekennzeichnet, dass** die Verbindungen "a", "b", "c" und "d" mindestens 55 Gew.-%, vorzugsweise mindestens 75 Gew.-%, beispielsweise mindestens 90 Gew.-%, mindestens 95 Gew.-%, mindestens 99 Gew.-% oder gar 100 Gew.-% der endgültigen Dispersion bilden.

6. Dispersion nach einem der vorstehenden Ansprüche, **dadurch gekennzeichnet, dass** sie einen Wassergehalt von weniger als 2 Gew.-%, vorzugsweise von weniger als 1 Gew.-%, beispielsweise weniger als 0,5 Gew.-%, oder gar weniger als 0,2 Gew.-% umfasst.

7. Tinte auf Basis von Silbernanopartikeln, deren Zusammensetzung mindestens Folgendes umfasst:
a. eine Dispersion nach einem der Ansprüche 1 bis 6,
b. eine Verbindung "e" bestehend aus einem Lösungsmittel, das sich von der verwendeten Verbindung "b" unterscheidet, und
c. eine optionale Verbindung "f" bestehend aus einem Rheologie-Modifiziermittel.

8. Tinte nach dem vorstehenden Anspruch, **gekennzeichnet durch** eine Viskosität zwischen 2 und 20 mPa.s.

9. Tinte nach einem der Ansprüche 7 und 8, **dadurch gekennzeichnet, dass** die Verbindung "e" ein Alkohol, vorzugsweise ein Alkohol ausgewählt aus der Gruppe bestehend aus einwertigen Alkoholen (beispielsweise Butanol, Pentanol, Hexanol usw.) und/oder Glykolen (beispielsweise Ethylenglykol, Propylenglykol, Diethylenglykol usw.) und/oder Glykolethern (beispielsweise Mono- oder Diglykolether, von denen wir als Beispiele Ethylenglykol-propylether, Ethylenglykol-butylether, Ethylenglykol-phenylether, Diethylenglykol-methylether, Diethylenglykol-ethylether, Diethylenglykol-propylether, Diethylenglykol-butylether, Propylenglykol-methylether, Propylenglykol-butylether, Propylenglykol-propylether, Ethylenglykol-dimethylether, Ethylenglykol-diethylether, Ethylenglykol-dibutylether, Glymes, Diethylenglykoldiethylether, Dibutylenglykol-diethylether, Diglymes, Ethyldiglym, Butyldiglym zitieren) und/oder Glykoletheracetate (beispielsweise 2-Butoxyethylacetat, Diethylenglykolmonoethyletheracetat, Diethylenglykol-butyletheracetat, Propylenglykol-methyletheracetat) und/oder eine Mischung aus zwei oder mehreren dieser Lösungsmittel ist.

10. Tinte nach einem der Ansprüche 7 bis 9, **dadurch gekennzeichnet, dass** die Verbindung "f" (Rheologie-Modifiziermittel) vorhanden ist und ausgewählt wird aus Alkyl-Cellulose, vorzugsweise Ethylcellulose, Nitrocellulosen, Alkydharzen und den modifizierten Harnstoffen, vorzugsweise Polyharnstoffen und/oder deren Mischungen.

11. Tinte nach einem der Ansprüche 7 bis 10, **dadurch gekennzeichnet, dass** sie ein zusätzliches Lösungsmittel, die Verbindung "X", umfasst, das vorzugsweise gleich der Verbindung "b" ist.

12. Tinte nach einem der Ansprüche 7 bis 11, **dadurch gekennzeichnet, dass** sie Folgendes umfasst:
• die Dispersion nach einem der Ansprüche 1 bis 6, mit einem Gehalt kleiner oder gleich 60 Gew.-%, und vorzugsweise größer als 5 Gew.-%, vorzugsweise größer als 10 Gew.-%, beispielweise vorzugsweise größer als 20 Gew.-%
• die Verbindung "e" mit einem Gehalt zwischen 1 und 40 Gew.-%, vorzugsweise zwischen 15 und 30 Gew.-%,
• die optionale Verbindung "f" mit einem Gehalt kleiner als 20 Gew.-%, vorzugsweise zwischen 0,1 und 2 Gew.-%, und
• die optionale Verbindung "X" mit einem Gehalt mit einem Gehalt kleiner als 60 Gew.-%, vorzugsweise kleiner als 40 Gew.-% und vorzugsweise größer als 5 Gew.-%, beispielsweise größer als 15 Gew.-%.

13. Tinte nach einem der Ansprüche 7 bis 12, **dadurch gekennzeichnet, dass** die Verbindungen "a", "b", "c", "d", "e", "f" und "X" mindestens 50 Gew.-%, vorzugsweise mindestens 75 Gew.-%, beispielsweise mindestens 90 Gew.-%, mindestens 95 Gew.-%, mindestens 99 Gew.-% oder gar 100 Gew.-% der endgültigen Tinte bilden.

14. Tinte nach einem der Ansprüche 7 bis 13, **dadurch gekennzeichnet, dass** sie einen Wassergehalt von weniger als 2 Gew.-%, vorzugsweise von weniger als 1 Gew.-%, beispielsweise weniger als 0,5 Gew.-%, oder gar weniger als 0,2 Gew.-% umfasst.

15. Verfahren zum Herstellen der Nanopartikel-Dispersion nach einem der Ansprüche 1 bis 6, **gekennzeichnet durch** die folgenden Schritte:
a. Synthese der Silbernanopartikel im Beisein des Dispergiermittels (Verbindung "c") durch Reduktion anhand eines Reduktionsmittels einer Silbervorstufe;
b. Waschen/Reinigen der in Schritt "a" erhaltenen Nanopartikel,
c. Beigeben der Verbindung "b" und der Verbindung "d", und **dadurch gekennzeichnet, dass** eine Flüssigphase bei diesen Herstellungsschritten stets vorhanden ist.

16. Verfahren zum Herstellen der Tinte nach einem der Ansprüche 7 bis 14, **dadurch gekennzeichnet, dass** die Dispersion nach Anspruch 15 hergestellt worden ist.

## Claims

1. Silver nanoparticle-based dispersion, the composition of which comprises at least:
a. a composition "a" consisting of silver nanoparticles,
b. a composition "b" consisting of a cyclooctane solvent, and/or a fatty acid methyl ester solvent and/or a terpene solvent selected from hydrocarbons and their aldehyde, ketone and/or terpene acid derivatives, and/or a mixture of two or more of said solvents,
c. a composition "c" consisting of a dispersing agent, and
d. a composition "d" consisting of a dispersing agent different than the composition "c" used.

2. Dispersion according to the preceding Claim, **characterized in that** the organic dispersing agents "c" and "d" which are amines, preferably amines selected from the group consisting of propylamine, butylamine, pentylamine, hexylamine, heptylamine, octylamine, nonylamine, decylamine, undecylamine, dodecylamine, tridecylamine, tetradecylamine, hexadecylamine, diaminopentane, diaminohexane, diaminoheptane, diaminooctane, diaminononane, diaminodecane, dipropylamine, dibutylamine, dipentylamine, dihexylamine, diheptylamine, dioctylamine, dinonylamine, didecylamine, methylpropylamine, ethylpropylamine, propylbutylamine, ethylbutylamine, ethylpentylamine, propylpentylamine, butylpentylamine, tributylamine, trihexylamine, or a mixture of two or more of these compounds.

3. Dispersion according to any one of the preceding Claims **characterized in that** it comprises
• compound "a" in an amount greater than 30% by weight, preferably greater than 35% by weight, for example greater than 40% by weight,
• compound "b" in an amount of between 20 and 65% by weight, preferably between 40 and 60% by weight,
• compound "c" in an amount of between 3 and 15% by weight, preferably between 3 and 10% by weight, and
• compound "d" in an amount of between 0.1 and 15% by weight, preferably between 0.4 and 5% by weight.

4. Dispersion according to any one of the preceding Claims **characterized in that** the silver nanoparticles are synthesized by chemical synthesis, by reduction of the silver precursor in the presence of a synthesis solvent and **in that** the synthesis solvent used is different from the compound "b" used.

5. Dispersion according to any one of the preceding Claims **characterized in that** compounds "a", "b", "c" and "d" constitute at least 55% by weight of the final dispersion, preferably at least 75% by weight, e.g., at least 90% by weight, at least 95% by weight, at least 99% by weight, or even 100% by weight of the final dispersion.

6. Dispersion according to any one of the preceding Claims **characterized in that** it comprises an amount in water lower than 2% by weight, preferably lower than 1% by weight, for example lower than 0.5% by weight, or even lower than 0.2% by weight.

7. Silver nanoparticle-based ink, the composition of which comprises at least:
a. dispersion according to any one of Claims 1 to 6,
b. a composition "e" consisting of a solvent different from composition "b" used, and
c. an optional composition "f' consisting of a rheology modifier.

8. Ink in accordance with the foregoing Claim **characterized by** a viscosity of between 2 and 20 mPa.s.

9. Ink according to any one of Claims 7 and 8 **characterized in that** compound "e" is an alcohol, preferably an alcohol selected from the group consisting of monohydric alcohols (i.e., butanol, pentanol, hexanol,.....) and/or glycols (for example, ethylene glycol, propylene glycol, diethylene glycol,.....), and/or glycol ethers (for example the mono- or di-ether glycols, among which we will mention as examples ethylene glycol propyl ether, ethylene glycol butyl ether, ethylene glycol phenyl ether, diethylene glycol methyl ether, diethylene glycol ethyl ether, diethylene glycol propyl ether, diethylene glycol butyl ether, propylene glycol methyl ether, propylene glycol butyl ether, propylene glycol propyl ether, ethylene glycol di-methyl ether, ethylene glycol di-ethyl ether, ethylene glycol di-butyl ether, glymes, diethylene glycol diethyl ether, di-butylene glycol diethyl ether, diglymes, ethyl diglyme, butyl diglyme), and/or glycol ether acetates (for example, 2-butoxyethyl acetate, diethylene glycol monoethyl ether acetate, diethylene glycol butyl ether acetate, propylene glycol methyl ether acetate), and/or a mixture of two or more of said solvents.

10. Ink according to any one of Claims 7 to 9 **characterized in that** the compound "f' (rheology modifier) is present and is selected from alkyl-cellulose, preferably ethylcellulose, nitro-celluloses, alkyd and acrylic resins and modified ureas, preferably polyureas, and/or mixtures thereof.

11. Ink according to any one of Claims 7 to 10 **characterized in that** it comprises an additional solvent, compound "X", which is preferably identical to compound "b".

12. Ink according to any one of Claims 7 to 11 **characterized in that** it comprises
• the dispersion according to any one of Claims 1 to 6 with a content of less than or equal to 60% by weight, and preferably greater than 5% by weight, preferably greater than 10% by weight, for example greater than 20% in weight
• compound "e" in an amount of between 1 and 40 % by weight, preferably between 15 and 30 % by weight,
• the optional compound "f" in a content of less than 20% by weight, preferably between 0.1 and 2% by weight, and
• The optional compound "X" in a content in a content of less than 60% by weight, preferably less than 40% by weight, and preferably greater than 5% by weight, for example greater than 15% by weight.

13. Ink according to any one of Claims 7 to 12 **characterized in that** compounds "a", "b", "c", "d", "e", "f', and "X" constitute at least 50% by weight of the final ink, preferably at least 75% by weight, for example at least 90% by weight, at least 95% by weight, at least 99% by weight, or even 100% by weight of the final ink.

14. Ink according to any one of Claims 7 to 13 **characterized in that** it comprises an amount in water lower than 2% by weight, preferably lower than 1 % by weight, for example lower than 0.5% by weight, or even lower than 0.2% by weight.

15. Method for preparing the nanoparticle dispersion according to any one of Claims 1 to 6 **characterized by** the following steps:
a. synthesis of the silver nanoparticles in the presence of the dispersing agent (compound "c") by reduction using a silver precursor reducing agent;
b. washing/purification of the nanoparticles obtained in step "a",
c. additions of the compound "b" and the compound "d" and **characterized in that** a liquid phase is always present during these preparatory steps.

16. Method for preparing the ink according to any one of Claims 7 to 14, **characterized in that** the dispersion has been prepared according to Claim 15.
